# EUROPÄISCHE PATENTANMELDUNG

(11) **EP 3 588 223 A1**
(43) Veröffentlichungstag der Anmeldung: **01.01.2020**
(21) Anmeldenummer: 18179008.0
(22) Anmeldetag: 21.06.2018
(51) Int. Cl.: G05B 23/02

(54) **VERFAHREN UND SYSTEM ZUM BEREITSTELLEN EINER ANALYSEFUNKTION**

(71) Anmelder: Siemens Aktiengesellschaft, 80333 München (DE)
(72) Erfinder: Schall, Daniel, 1220 Wien (AT)

(57) **Zusammenfassung**

Verfahren zum Bereitstellen einer Analysefunktion; System; Computerprogramm; Speichermedium; sowie Datenstrom

Die Erfindung betrifft ein Verfahren zum Bereitstellen einer Analysefunktion (11) für einen Betrieb einer Gerätschaft (2). Um eine zügigere Bereitstellung der Analysefunktion (11) für die Gerätschaft (2) zu ermöglichen, sind folgende Schritte vorgesehen:
- Auswerten (S3) von ersten Betriebsdaten (7) der Gerätschaft (2) durch eine Auswertevorrichtung (4),
- Empfangen (S4) eines Auswertungsergebnisses (9) der Auswertung durch eine Servervorrichtung (5),
- basierend auf dem Auswertungsergebnis (9), Bereitstellen (S5) einer Analysefunktion (11) zum Analysieren von den ersten Betriebsdaten (7) verschiedener zweiter Betriebsdaten (8) der Gerätschaft (2) durch die Servervorrichtung (5), und
- Analysieren (S6) der zweiten Betriebsdaten (8) mittels der Analysefunktion (11) durch die Servervorrichtung (5).

## Beschreibung

Ein erster Aspekt der Erfindung betrifft ein Verfahren zum Bereitstellen einer Analysefunktion für einen Betrieb einer Gerätschaft. Ein zweiter Aspekt der Erfindung betrifft ein System zum Bereitstellen einer Analysefunktion mit einer Gerätschaft. Zur Erfindung gehören außerdem ein Computerprogramm mit Programmcodemitteln, ein Speichermedium sowie ein Datenstrom.

Gerätschaften, insbesondere industriell genutzte Produktionsgerätschaften im weitesten Sinne, können miteinander vernetzt werden. Beispiele für solche Gerätschaften sind einzelne Produktionsanlagen, Produktionsmaschinen, Sensoren und Aktoren beziehungsweise Motoren. Hierbei können Gerätschaften unterschiedlicher Hierarchieebenen miteinander vernetzt werden. Wie im Beispiel genannt, können dabei auch kleinste Einheiten der Produktionsanlagen, beispielsweise die Sensoren oder Aktoren beziehungsweise Motoren als eigenständiger Teil mit dem Netzwerk verbunden werden. Dieses Prinzip wird auch als "Internet of Things", zu Deutsch "Internet der Dinge" bezeichnet. Im industriellen Maßstab wird dies auch als Industrie 4.0 bezeichnet, welche durch die feingliedrige und eigenständige Vernetzung der einzelnen Gerätschaften ein besonders hohes Maß an Produktivität und Flexibilität ermöglicht. Dies ist zudem in den europäischen Patentanmeldungen mit den Siemens-Aktenzeichen 201803975 und 201724079 beschrieben.

Zur Steuerung, Überwachung und/oder Wartung derartiger Gerätschaften können Betriebsdaten der Gerätschaft analysiert werden. Anwendungsfälle hierfür sind beispielsweise prädiktive Instandhaltung beziehungsweise prädiktive Wartung durch Überwachen eines Zustands der Gerätschaft in Echtzeit oder die Reduktion eines Energiebedarfs oder Materialverbrauchs in dem Betrieb der Gerätschaft durch die Ausgabe von Empfehlungen oder adaptive Steuermechanismen.

Die Betriebsdaten können gesammelt und zur Auswertung der zugrunde liegenden Abhängigkeiten von Betriebsdaten und Betriebszustand einem Ingenieur bereitgestellt werden. Als Auswertungsergebnis dieser Auswertung kann der Ingenieur eine Vorschrift (beispielsweise ein Script) erstellen, aus welcher hervorgeht, wie die Betriebsdaten zu analysieren sind. Um eine Analysefunktion zu erstellen, wird diese Vorschrift anschließend in einer Servereinrichtung implementiert. Hierfür sind Entwickler nötig. Erst nach der Implementierung durch einen Entwickler kann der Ingenieur die Analysefunktion beziehungsweise die Vorschrift in ihrer späteren Umgebung testen. Auf diese Weise können sich auf zeitintensive Weise Schleifen ergeben, in denen abwechselnd die Vorschrift verbessert und wiederum in die Analysefunktion implementiert werden muss.

Es ist Aufgabe der vorliegenden Erfindung, eine zügigere Bereitstellung einer Analysefunktion für eine Gerätschaft zu ermöglichen.

Diese Aufgabe wird erfindungsgemäß gelöst durch die Gegenstände der unabhängigen Patentansprüche. Vorteilhafte Ausführungsformen mit zweckmäßigen Weiterbildungen sind Gegenstand der Unteransprüche.

Ein erster Aspekt der Erfindung betrifft ein Verfahren zum Bereitstellen einer Analysefunktion für einen Betrieb einer Gerätschaft mit folgenden Schritten:
- Auswerten von ersten Betriebsdaten der Gerätschaft durch eine Auswertevorrichtung,
- Empfangen eines Auswertungsergebnisses der Auswertung durch eine Servervorrichtung,
- basierend auf dem Auswertungsergebnis, Bereitstellen einer Analysefunktion zum Analysieren von den ersten Betriebsdaten verschiedener zweiter Betriebsdaten der Gerätschaft, und
- Analysieren der zweiten Betriebsdaten mittels der Analysefunktion durch die Servervorrichtung.

Das Verfahren kann zusätzlich die folgenden, optionalen Schritte umfassen:
- Empfangen von den ersten Betriebsdaten von der Gerätschaft und
- Übermitteln der ersten Betriebsdaten für eine Auswertung an die Auswertevorrichtung.

Das Empfangen der ersten Betriebsdaten und/oder das Übermitteln der ersten Betriebsdaten an die Auswertevorrichtung kann durch eine Datensammeleinheit erfolgen. Die Datensammeleinheit kann Teil der Gerätschaft oder Teil der Servervorrichtung sein. Alternativ kann die Datensammeleinheit sowohl von der Gerätschaft als auch von der Servervorrichtung räumlich getrennt sein. Die Gerätschaft und die Servervorrichtung können räumlich voneinander getrennt sein. Beim Empfangen der ersten Betriebsdaten können diese, insbesondere durch die Datensammeleinheit, gesammelt werden. Anschließend können die ersten Betriebsdaten gesammelt an die Auswertevorrichtung übermittelt werden. Dementsprechend kann die Datensammeleinheit eine Datenbank aufweisen.

Nach dem Übermitteln der ersten Betriebsdaten an die Auswertevorrichtung kann beispielsweise das Auswerten der ersten Betriebsdaten durch die Auswertevorrichtung erfolgen. Beispielsweise handelt es sich bei der Auswertevorrichtung um eine Recheneinheit, insbesondere einen Computer, ein Notebook oder ein mobiles Endgerät. Durch die Auswertevorrichtung kann bei dem Auswerten der ersten Betriebsdaten ein Zusammenhang zwischen den Betriebsdaten und einem Betriebszustand, einem Wartungszustand und/oder einem bevorstehenden Defekt der Gerätschaft hergestellt werden. Insbesondere kann die Auswertevorrichtung zum Auswerten Auswertebefehle eines Nutzers empfangen. Mit anderen Worten kann die Auswertevorrichtung eine Steuerung der Auswertung durch einen Nutzer ermöglichen. Das Auswertungsergebnis kann durch die Auswertevorrichtung an die Servervorrichtung übermittelt werden.

Die Servervorrichtung und die Auswertevorrichtung sind insbesondere räumlich voneinander getrennt. Insbesondere ist die Servervorrichtung von der Gerätschaft räumlich getrennt. Es erfolgt durch die Servervorrichtung das Bereitstellen der Analysefunktion zum Analysieren der zweiten Betriebsdaten. Die zweiten Betriebsdaten können sich dahingehend von den ersten Betriebsdaten unterscheiden, dass die zweiten Betriebsdaten nach dem Bereitstellen der Analysefunktion erstmals von der Gerätschaft empfangen werden. Allgemein werden die ersten Betriebsdaten zum Bilden beziehungsweise Bereitstellen der Analysefunktion genutzt, während die zweiten Betriebsdaten für die anschließende Auswertung durch die Analysefunktion vorgesehen sind.

Das Bereitstellen der Analysefunktion basierend auf dem Auswerteergebnis kann vorteilhafterweise durch die Servervorrichtung automatisiert, insbesondere ohne Nutzereingriff, erfolgen. Als Nutzereingriff werden hier solche Nutzereingriffe bezeichnet, welche durch geistige Tätigkeit des Nutzers das Bereitstellen der Analysefunktion inhaltlich beeinflussen, insbesondere eine Programmiertätigkeit. Ein Befehlen des Bereitstellens oder ein bloßes Überwachen des Bereitstellens sind ausdrücklich keine hier gemeinten Nutzereingriffe.

Bei dem Analysieren der zweiten Betriebsdaten kann mittels des im Rahmen der Auswertung ermittelten Zusammenhangs der Betriebszustand, der Wartungszustand und/oder ein bevorstehender Defekt der Gerätschaft anhand der zweiten Betriebsdaten prognostiziert werden. Allgemein kann beim Analysieren der zweiten Betriebsdaten der Betriebszustand oder der Wartungszustand bestimmt werden oder ein bevorstehender Defekt an der Gerätschaft prognostiziert werden. Zum Analysieren der zweiten Betriebsdaten können diese zunächst durch die Servervorrichtung von der Gerätschaft oder von der Datensammeleinheit empfangen werden. Beispielsweise werden die zweiten Betriebsdaten auf analoge Weise durch die Datensammeleinheit gesammelt, wie die ersten Betriebsdaten.

Das vorliegende Verfahren kann folgende innovative Aspekte aufweisen: Schnellere Bereitstellung der Analysefunktion anhand des Auswertungsergebnisses gegenüber dem Stand der Technik. Mögliche Bereitstellung der Analysefunktion für einen Anwender, beispielsweise einen Betreiber der Gerätschaft, als Service, im Rahmen eines so genannten Function-as-a-Service-Konzepts (FaaS), statt dass der Anwender hierzu einen eigenen Server betreibt. Aus einer derartigen Bereitstellung der Funktion ergeben sich zusätzlich eine hohe Skalierbarkeit und/oder eine geringe Latenz für die Analyse. Eine besonders serviceorientierte Bereitstellung der Analysefunktion für den Anwender ist gewährleistet. Durch die Servervorrichtung beziehungsweise die Analysefunktion können relevante Parameter der zweiten Betriebsdaten automatisch überwacht und empfangen werden. Die zweiten Betriebsdaten können in Form einer Zeitreihenanalyse zeitlich abhängig analysiert werden. Außerdem kann die Analysefunktion sowohl innerhalb der Servervorrichtung und/oder in einer lokalen Recheneinheit (beispielsweise Computer, Notebook, Tabletcomputer oder mobiles Endgerät) des Anwenders bereitgestellt werden. Insbesondere kann die Analyse von dem lokalen Endgerät des Anwenders aus ausgeführt werden, ohne dass dieses hierfür ausreichende Rechenkapazitäten bereithalten muss, da die eigentliche Analyse durch die Servervorrichtung durchgeführt werden kann.

Gemäß einer Weiterbildung ist vorgesehen, dass die ersten Betriebsdaten und die zweiten Betriebsdaten jeweils aus mehreren funktionellen Einheiten der Gerätschaft empfangen werden. Die mehreren funktionellen Einheiten können jeweils einzelne Bauteile, Sensoren oder Aktoren der Gerätschaft sein. Durch die Datensammeleinheit können jeweilige Anteile der ersten Betriebsdaten aus den mehreren funktionellen Einheiten gesammelt werden. Aus umso mehr funktionellen Einheiten der Gerätschaft die ersten beziehungsweise die zweiten Betriebsdaten gesammelt werden, desto umfangreicher beziehungsweise genauer kann die Analyse mittels der Analysefunktion sein.

Beispielsweise werden die ersten Betriebsdaten zumindest aus einer ersten funktionellen Einheit sowie aus einer zweiten funktionellen Einheit der Gerätschaft empfangen. Die zweiten Betriebsdaten werden vorteilhafter Weise aus denselben funktionellen Einheiten, nämlich der ersten funktionellen Einheit und der zweiten funktionellen Einheit, der Gerätschaft empfangen. Die funktionellen Einheiten können jeweils einen Datenpunkt oder mehrere Datenpunkte aufweisen. Die Datenpunkte können dabei als Ausgabeeinheit jeweils einer physikalischen Größe aufgefasst werden, wobei sich die physikalische Größe selbst nicht ändert, deren Wert jedoch einer zeitlichen Änderung unterworfen sein kann. Beispiele für Datenpunkte sind eine Stromaufnahme eines Elektromotors, ein Maß für die Vibration der Gerätschaft welche durch einen Vibrationssensor gemessen wird oder eine Temperatur der Gerätschaft.

Gemäß einer Weiterbildung ist vorgesehen, dass eine Vorschrift zum Analysieren der zukünftigen Betriebsdaten als das Auswertungsergebnis empfangen wird, und beim Bereitstellen der Analysefunktion die Analysefunktion aus der empfangenen Vorschrift zum Analysieren gebildet wird. Beispielsweise umfasst die empfangene Vorschrift die jeweiligen Zusammenhänge zwischen den ersten Betriebsdaten beziehungsweise den zweiten Betriebsdaten und dem Betriebszustand, dem Wartungszustand und/oder dem bevorstehenden Defekt der Gerätschaft. Beispielsweise kann die Vorschrift eine mathematische Formel, eine statistische Verteilung und/oder ein Script umfassen. Die Analysefunktion kann durch Einbetten der empfangenen Vorschrift in eine ausführbare Funktion der Servervorrichtung bereitgestellt werden. Auf diese Weise kann die Analysefunktion besonders unkompliziert bereitgestellt werden.

Gemäß einer Weiterbildung ist vorgesehen, dass das Bereitstellen der Analysefunktion zumindest teilweise durch einen Parser erfolgt und der Parser hierbei eine Schnittstelle zum Analysieren der zweiten Betriebsdaten durch das Auswertungsergebnis, insbesondere die als das Auswertungsergebnis empfangene Vorschrift, erzeugt. Beispielsweise analysiert der Parser das Script oder die mathematische Formel, die Teil der empfangenen Vorschrift ist und bildet daraus die Analysefunktion. Allgemein können durch die Vorschrift bereitgestellte Auswertungsoperationen zum Auswerten der zweiten Betriebsdaten durch den Parser ermittelt und als Teil der Analysefunktion bereitgestellt werden. Auf diese Weise kann die Analysefunktion besonders vorteilhaft aus der Vorschrift erzeugt werden.

Gemäß einer Weiterbildung ist vorgesehen, dass die ersten Betriebsdaten und die zweiten Betriebsdaten in zu nutzende und nicht zu nutzende Daten kategorisiert werden, und nur die zu nutzenden Daten der zweiten Betriebsdaten für die Analyse verwendet werden. Beispielsweise erfolgt dies bei der Auswertung der ersten Betriebsdaten. Mit anderen Worten können bei der Auswertung der ersten Betriebsdaten diese in die zu nutzenden und die nicht zu nutzenden Daten unterteilt werden. Diese Unterteilung beziehungsweise Kategorisierung kann beispielsweise Teil des Auswertungsergebnisses sein. Beispielsweise umfassen die ersten Betriebsdaten Daten aus unterschiedlichen Datenpunkten. Die unterschiedlichen Datenpunkte können beispielsweise über die mehreren funktionellen Einheiten der Gerätschaft verteilt sein. Im Rahmen der Auswertung kann dann ermittelt werden, welche der Datenpunkt für die Analyse von Bedeutung sind. Die Datenpunkt, welche für die Analyse von Bedeutung sind, können als die zu nutzenden Daten kategorisiert werden. Den zu nutzenden Daten der ersten Betriebsdaten entsprechende Daten der zweiten Betriebsdaten werden ebenfalls als zu nutzende Daten kategorisiert. Beispielsweise werden Datenpunkte der zweiten Betriebsdaten abhängig davon, ob entsprechende Datenpunkte der ersten Betriebsdaten als zu nutzende Daten oder nicht zu nutzende Daten kategorisiert wurden, kategorisiert. Konkret können die Datenpunkte der zweiten Betriebsdaten den zu nutzenden Datenpunkten der ersten Betriebsdaten entsprechen, die zu nutzenden Betriebsdaten der zweiten Betriebsdaten sein. Gemäß einer Weiterbildung kann vorgesehen sein, dass die nicht zu nutzenden Daten der zweiten Betriebsdaten gar nicht erst erhoben beziehungsweise gesammelt werden. Insgesamt wird auf diese Weise gewährleistet, dass nur Daten, welche für die Analyse tatsächlich von Belang sind, für die Analyse herangezogen werden.

Gemäß einer Weiterbildung ist vorgesehen, dass die zu nutzenden Daten der zweiten Betriebsdaten wiederholt aus der Gerätschaft abgerufen werden, die zu nutzenden Daten der zweiten Betriebsdaten jeweils auf Änderungen untersucht werden und bei einer Änderung jeweiliger der zu nutzenden Daten der zweiten Betriebsdaten, diese mit der Analysefunktion analysiert werden. Das wiederholte Abrufen der zu nutzenden Daten der zweiten Betriebsdaten kann insbesondere periodisch oder regelmäßig erfolgen. Insbesondere werden die Daten der zweiten Betriebsdaten jedes Mal mittels der Analysefunktion analysiert, wenn eine Änderung jeweiliger der zu nutzenden Daten der zweiten Betriebsdaten erkannt wird. Auf diese Weise kann die Analyse der Betriebsdaten auf ressourcenschonende Weise immer nur dann erfolgen, wenn an den Betriebsdaten eine Änderung vorliegt.

Gemäß einer Weiterbildung ist vorgesehen, dass bei Aufruf der Analysefunktion ein Zähler einer Zähleinrichtung um ein Maß, insbesondere ein vorgegebenes oder vorgebbares Maß, verändert wird. Die Zähleinrichtung ist insbesondere Teil der Servervorrichtung. Der Zähler der Zähleinrichtung kann angeben, wie oft und/oder in welchem Umfang die Analysefunktion aufgerufen wurde. Der Zähler kann zum Berechnen einer Vergütung genutzt werden, die durch den Anwender der Analysefunktion zu entrichten ist. Insbesondere kann der Zähler jedes Mal, wenn die Analysefunktion aufgerufen wird, um das Maß, insbesondere das vorgegebene oder vorgebbare Maß, verändert werden. Durch den Zähler kann ermittelt werden, wie häufig die Analysefunktion genutzt wird.

Gemäß einer Weiterbildung ist vorgesehen, dass das Maß, um welches der Zähler der Zähleinrichtung verändert wird, abhängig von einem Umfang der zweiten Betriebsdaten und/oder einem Zeitaufwand für einen jeweiligen Aufruf der Analysefunktion vorgegeben wird. Mit anderen Worten kann der Zähler der Zähleinrichtung bei jedem Aufruf der Analysefunktion um ein vorgebbares Maß verändert werden, wobei das vorgebbare Maß abhängig von dem Zeitaufwand beim Aufruf der Analysefunktion und/oder einem Umfang der zweiten Betriebsdaten vorgegeben wird. Auf diese Weise kann noch besser ermittelt werden, wie stark die Analysefunktion in Gebrauch ist. Der Zeitaufwand kann beispielsweise eine Rechenzeit eines Mikroprozessors der Servervorrichtung sein, wobei auf dem Mikroprozessor die Analysefunktion angewendet wird.

Gemäß einer Weiterbildung ist vorgesehen, dass bei dem Analysieren der zweiten Betriebsdaten basierend auf den zweiten Betriebsdaten eine verbleibende Lebensdauer zumindest eines Bauteils der Gerätschaft durch die Analysefunktion ermittelt wird. Die derart ermittelte Lebensdauer kann dann ausgegeben werden, beispielsweise an einen Nutzer und/oder an eine Steuereinheit. Mit anderen Worten kann die Analysefunktion einen Wert für die verbleibende Lebensdauer des zumindest einen Bauteils der Gerätschaft als das Ergebnis der Analyse der zweiten Betriebsdaten ausgeben. Auf diese Weise kann die Analysefunktion zur prädiktiven Instandhaltung genutzt werden, da Bauteile mit geringer verbleibender Lebensdauer prädiktiv ausgetauscht werden können, um einen Stillstand der Gerätschaft aufgrund eines Defekts an dem Bauteil zu vermeiden.

Ein weiterer Aspekt der Erfindung betrifft ein System zum Bereitstellen einer Analysefunktion für einen Betrieb einer Gerätschaft, welche Teil des Systems ist, mit
- einer Auswertevorrichtung zum Auswerten erster Betriebsdaten,
- einer Datensammeleinheit zum Empfangen von der ersten Betriebsdaten von der Gerätschaft und zum Übermitteln der ersten Betriebsdaten für eine Auswertung an die Auswertevorrichtung, und
- einer Servervorrichtung zum Empfangen eines Auswertungsergebnisses der Auswertung von der Auswertevorrichtung, zum automatisierten Bereitstellen einer Analysefunktion zum Analysieren zweiter Betriebsdaten der Gerätschaft, die von den ersten Betriebsdaten verschieden sind, basierend auf dem Auswertungsergebnis und zum Empfangen und Analysieren der zweiten Betriebsdaten mittels der Analysefunktion.

Vorteilhafter Weise ist das System dazu eingerichtet, ein Verfahren zum Bereitstellen einer Analysefunktion der zuvor und nachfolgend beschriebenen Art durchzuführen. Merkmale und Weiterbildungen des erfindungsgemäßen Verfahrens gelten analog auch für das erfindungsgemäße System.

Bei der Gerätschaft handelt es sich insbesondere um eine industriell genutzte Produktionsgerätschaft im weitesten Sinne. Beispiele für Gerätschaften sind somit einzelne Produktionsanlagen, Produktionsmaschinen, Sensoren und Aktoren beziehungsweise Motoren.

Zur Erfindung gehört unter anderem ein Computerprogramm, welches direkt in einen Speicher einer Steuereinrichtung eines erfindungsgemäßen Systems ladbar ist, mit Programmcodemitteln, um die Schritte des erfindungsgemäßen Verfahrens auszuführen, wenn das Programm in der Steuereinrichtung des erfindungsgemäßen Systems ausgeführt wird. Das erfindungsgemäße Computerprogramm implementiert das erfindungsgemäße Verfahren auf einer Steuereinrichtung des erfindungsgemäßen Systems, wenn es auf der Steuereinrichtung ausgeführt wird. Dementsprechend gehört zur Erfindung außerdem ein Speichermedium mit darauf gespeicherten elektronisch lesbaren Steuerinformationen, welche zumindest das genannte Computerprogramm umfassen und derart ausgestaltet sind, dass sie bei Verwendung des Speichermediums in einer Steuereinrichtung eines erfindungsgemäßen Systems das erfindungsgemäße Verfahren durchführen. Das Speichermedium kann beispielsweise zum digitalen oder analogen Speichern von Daten eingerichtet sein. Das Speichermedium kann, einfach oder mehrfach beschreibbar, flüchtig (volatil) oder nicht flüchtig sein.

Ein weiterer Aspekt der Erfindung betrifft einen Datenstrom mit einem Analyseergebnis, welches mittels eines Verfahrens zum Bereitstellen einer Analysefunktion, wie es ihm Rahmen dieser Anmeldung beschrieben ist, gewonnen wurde.

Zur Erfindung gehört außerdem ein Verfahren zum Speichern von Daten, welche ein Analyseergebnis umfassen, das mittels eines Verfahrens zum Bereitstellen einer Analysefunktion gewonnen wurde, auf ein weiteres Speichermedium. Bei diesen Daten kann es sich um den obengenannten Datenstrom handeln. Das weitere Speichermedium kann beispielsweise zum digitalen oder analogen Speichern von Daten eingerichtet sein. Das weitere Speichermedium kann, einfach oder mehrfach beschreibbar, flüchtig (volatil) oder nicht flüchtig sein.

Die vorliegende Erfindung wird nun anhand der beigefügten Zeichnungen näher erläutert:
- FIG 1: ein System mit einer Gerätschaft, einer Datensammeleinheit, einer Auswertevorrichtung und einer Servervorrichtung; und
- FIG 2: ein Ablaufdiagramm einer beispielhaften Ausführungsform des vorliegenden Verfahrens.

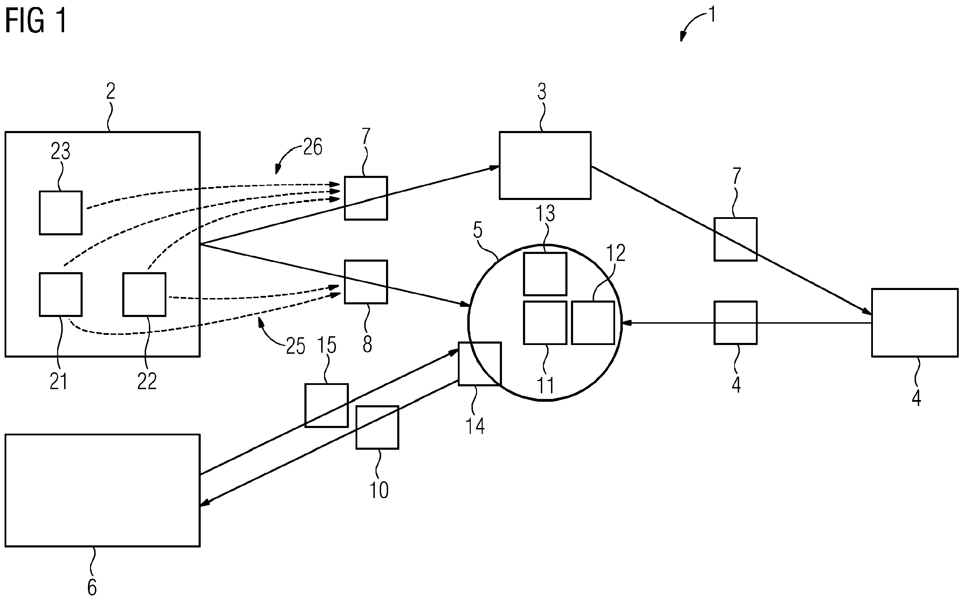

Hierbei zeigt die FIG 1 ein System 1, welches vorliegend eine Gerätschaft 2, eine Datensammeleinheit 3, eine Auswertevorrichtung 4, sowie eine Servervorrichtung 5 umfasst. Bei der Gerätschaft 2 handelt es sich beispielsweise um einen einzelnen Sensor und/oder Aktor beziehungsweise Motor einer Produktionsmaschine, eine Produktionsmaschine, mehrere Produktionsmaschinen, oder eine ganze Anlage, insbesondere Produktionsanlage, welche mehrere Produktionsmaschinen umfassen kann. Vorliegend weist die Gerätschaft 2 funktionelle Einheiten 21, 22, 23 auf. Beispielsweise handelt es sich bei der Gerätschaft 2 um einen Elektromotor einer Produktionsmaschine. In diesem Beispiel kann eine erste funktionelle Einheit 21 als Vibrationssensor zum Erfassen von Vibrationen der Gerätschaft ausgeführt sein. Eine zweite funktionelle Einheit 22 kann in diesem Beispiel als Strommessgerät zum Messen eines Stromflusses in der Gerätschaft 2 ausgebildet sein. Zusätzlich kann eine dritte funktionelle Einheit 23 als Temperatursensor ausgeführt sein. Die funktionellen Einheiten 21, 22, 23 können jeweils als Datenpunkte aufgefasst werden.

Die Datensammeleinheit 3 ist dazu ausgebildet, erste Betriebsdaten 7 aus der Gerätschaft 2 zu empfangen und zu sammeln. Die ersten Betriebsdaten 7 können jeweilige Daten aus den mehreren funktionellen Einheiten 21, 22, 23 der Gerätschaft 2 umfassen. Beispielsweise umfassen die ersten Betriebsdaten 7 ein Maß für eine Vibration aus der ersten funktionellen Einheit 21, ein Maß für einen Stromfluss in der Gerätschaft 2 aus der zweiten funktionellen Einheit 22 sowie einen Temperaturwert aus der dritten funktionellen Einheit 23. Diese ersten Betriebsdaten 7 können beispielsweise über einen vorgegebenen Zeitraum, beispielsweise einige Stunden, einige Tage, einige Wochen oder ein Jahr, gesammelt werden. Beispielsweise ruft die Datensammeleinheit 3 wiederholt, insbesondere periodisch, aktuelle Werte für die ersten Betriebsdaten 7 aus der Gerätschaft 2 ab. Diese Werte können dann über den vorbestimmten Zeitraum gesammelt werden.

Anschließend übermittelt die Datensammeleinheit 3 die ersten Betriebsdaten 7 an eine Auswertevorrichtung 4. Dies erfolgt insbesondere über das Internet. Die Datensammeleinheit 3 und die Auswertevorrichtung 4 sind vorliegend räumlich voneinander getrennt. Durch die Auswertevorrichtung 4 werden die ersten Betriebsdaten 7 ausgewertet. Beispielsweise wird im Rahmen dieser Auswertung eine Vorschrift bestimmt, mittels welcher basierend auf Betriebsdaten der Gerätschaft 2 deren Betriebszustand oder deren Wartungszustand bestimmt werden kann oder ein bevorstehender Defekt der Gerätschaft 2 prognostiziert werden kann. Beispielsweise können durch die Auswertevorrichtung 4 Befehle von einem Ingenieur, der über Wissend betreffend die Gerätschaft 2 verfügt, empfangen werden. Anhand dieser Befehle kann die Auswertung der ersten Betriebsdaten 7 durch die Auswertevorrichtung 4 gesteuert werden. Ein Auswertungsergebnis 9, welches, welches insbesondere die zuvor bestimmte Vorschrift umfasst, wird anschließend durch die Auswertevorrichtung 4 an eine Servervorrichtung 5 übermittelt.

Außerdem können im Rahmen dieser Auswertung die ersten Betriebsdaten 7 in zu nutzende Daten und nicht zu nutzende Daten unterteilt werden. Dabei können im Rahmen der Auswertung Daten aus den funktionellen Einheiten 21, 22, 23 abhängig davon, ob sie im Rahmen der Auswertung als für die spätere Analyse bedeutsam erkannt werden, in die zu nutzenden Daten oder die nicht zu nutzenden Daten eingeteilt werden. Mit anderen Worten werden die jeweiligen Daten aus den funktionellen Einheiten 21, 22, 23 in zwei Kategorien, nämlich die zu nutzenden Daten und die nicht zu nutzenden Daten, kategorisiert. Mit anderen Worten werden im Rahmen der Auswertung die Datenpunkte der Gerätschaft 2 entsprechend ihrer Bedeutung für die spätere Analyse, als zu nutzend oder nicht zu nutzend kategorisiert.

In einem konkreten Beispiel soll im Rahmen der Auswertung eine Vorschrift erzeugt werden, um einen bevorstehenden Ausfall der Gerätschaft 2, vorliegend des Elektromotors, zu prognostizieren. Beispielsweise werden die Daten aus der ersten funktionellen Einheit 21, also vorliegend das Maß für die Vibration, und die Daten aus der zweiten funktionellen Einheit 22, also vorliegend das Maß für den Stromfluss, in die Gruppe der zu nutzenden Daten eingeteilt. Beispielsweise werden die Daten aus der dritten funktionellen Einheit 23, vorliegend der Temperaturwert, in die Gruppe der nicht zu nutzenden Daten eingeteilt. Diese Einteilung kann vorliegend aus dem Grund erfolgen, weil im Rahmen der Auswertung der ersten Betriebsdaten 7 die jeweiligen Daten aus der ersten funktionellen Einheit 21 der zweiten funktionellen Einheit 22, also vorliegend das Maß für die Vibration sowie das Maß für den Stromfluss, als bedeutsam für das Prognostizieren des bevorstehenden Ausfalls erkannt wurden. Demgegenüber werden im vorliegenden Beispiel im Rahmen der Auswertung der ersten Betriebsdaten 7 die Daten aus der dritten funktionellen Einheit 23, also vorliegend der Temperaturwert, als nicht bedeutsam für die entsprechende Analyse erkannt.

Die Servervorrichtung 5 empfängt das Auswertungsergebnis 9 von der Auswertevorrichtung 4. Die Servervorrichtung 5 ist insbesondere räumlich von der Auswertevorrichtung 4 getrennt. Somit kann die Servervorrichtung 5 das Auswertungsergebnis 9 über das Internet von der Auswertevorrichtung 4 empfangen. Basierend auf dem Auswertungsergebnis 9, insbesondere der darin enthaltenen Vorschrift, kann durch die Servervorrichtung 5 automatisiert eine Analysefunktion 11 bereitgestellt werden. Mittels der Analysefunktion 11 können zweite Betriebsdaten 8 der Gerätschaft 2 analysiert werden.

Beispielsweise können die zweiten Betriebsdaten ausschließlich Daten derjenigen funktionellen Einheiten 21, 22 umfassen, deren Daten im Rahmen der Auswertung als zu nutzende Daten kategorisiert wurden. Dies ist in der FIG 1 durch die gestrichelten Pfeile 25 und 26 visualisiert: Die drei funktionellen Einheiten 21, 22, 23 tragen alle jeweilige Daten zu den ersten Betriebsdaten 7 bei. Zu den zweiten Betriebsdaten 8 tragen jedoch nur die funktionellen Einheiten 21, 23 Daten bei, da der deren Daten als zu nutzende Daten kategorisiert wurden.

Die Servervorrichtung 5 kann basierend auf dem Auswertungsergebnis 9 die Analysefunktion 11 in ausführbarer Form automatisiert bereitstellen. In ausführbarer Form bedeutet dabei insbesondere das auf einen Befehl eines Anwenders hin die zweiten Betriebsdaten 8 durch die Analysefunktion 11 automatisiert analysiert werden können. Die Servervorrichtung 5 kann die Analysefunktion 11 aus der Vorschrift erzeugen, die Teil des Auswertungsergebnisses 9 ist. Beispielsweise weist die Servervorrichtung 5 hierzu einen Parser 12 auf, der die Vorschrift bezüglich darin enthaltener Befehle, beispielsweise Rechenoperationen, untersucht und anhand dieser Befehle die Analysefunktion 11 erzeugt. Beispielsweise kann die Vorschrift in Form eines Scripts vorliegen. Der Parser 12 kann somit aus dem Script die Analysefunktion 11 erzeugen. Alternativ kann im Rahmen des automatisierten Bereitstellens das Script beziehungsweise die Vorschrift in ein ausführbares Programm der Servervorrichtung 5 eingebettet werden. Dabei wird die Vorschrift beziehungsweise das Script in seiner Form erhalten und durch Bereitstellung entsprechender Schnittstellen in das ausführbare Programm der Servervorrichtung 5 eingebettet. Das Bereitstellen derartiger Schnittstellen kann auch als Erzeugen von "Glue-Code", zu Deutsch in etwa "Verbindungscode", bezeichnet werden.

Dabei zeichnet sich die Analysefunktion 11 dadurch aus, dass diese in eine Anwenderschnittstelle 14 der Servervorrichtung 5 eingebettet ist. Auf diese Weise kann der Anwender die Analysefunktion 11 direkt über die Anwenderschnittstelle 14 aufrufen. Die Analysefunktion 11 wird für den Anwender somit serverlos, zu Englisch "serverless", beziehungsweise als Service, insbesondere im Rahmen eines so genannten Function-asa-Service-Konzepts (FaaS), bereitgestellt.

Die Analysefunktion 11 kann anschließend durch eine Recheneinheit 6 des Anwenders aufgerufen werden. Beispielsweise übermittelt die Recheneinheit 6 des Anwenders einen Aufrufbefehl 15 an die Servervorrichtung 5. Auf diesen Aufrufbefehl 15 hin kann die Servervorrichtung 5 die zweiten Betriebsdaten 8 aus der Gerätschaft 2 abrufen beziehungsweise empfangen und die zweiten Betriebsdaten 8 mittels der Analysefunktion 11 analysieren. Ein Analyseergebnis 10 kann daraufhin von der Servervorrichtung 5, insbesondere über die Anwenderschnittstelle 14, an die Recheneinheit 6 des Anwenders übermittelt werden. Die Analysefunktion 11 kann in der Recheneinheit 6 des Anwenders bereitgestellt werden, ohne dass die Recheneinheit 6 die Analyse selbst durchführen muss. In dem vorher genannten konkreten Beispiel kann der Anwender mittels des Analyseergebnisses 10 darauf hingewiesen werden, ob und wie akut ein Ausfall der Gerätschaft 2 bevorsteht.

Optional werden die zweiten Betriebsdaten 8 auf Änderungen der darin enthaltenen Daten überprüft. Dieses Überprüfen erfolgt insbesondere regelmäßig oder periodisch. Im vorliegenden konkreten Beispiel können das Maß für die Vibration und das Maß für die Stromaufnahme auf Veränderungen ihrer jeweiligen Werte überprüft werden. Die Analyse der zweiten Betriebsdaten 8 mittels der Analysefunktion 11 kann immer genau dann durchgeführt werden, wenn eine Veränderung der zweiten Betriebsdaten 8 vorliegt. Dieses Analysieren der zweiten Betriebsdaten 8 im Falle einer Veränderung kann insbesondere automatisiert, also ohne dass hierfür ein Aufrufbefehl 15 nötig wäre, durchgeführt werden.

Die zweiten Betriebsdaten 8 können abweichend von der vorliegenden FIG 1 durch die Datensammeleinheit 3 oder eine weitere Datensammeleinheit, welche von der Datensammeleinheit 3 unabhängig ist, gesammelt werden. In diesem Fall werden die zweiten Betriebsdaten 8 analog zu den ersten Betriebsdaten 7 gesammelt und gesammelt der Analysefunktion 11 übermittelt. Hierbei kann jeweiligen Werten der zweiten Betriebsdaten 8 ein Zeitstempel zugeordnet werden, um sicherzustellen, dass bei einem Aufruf der Analysefunktion 11 nur Werte der zweiten Betriebsdaten 8 analysiert werden, welche zur selben Zeit erfasst wurden. In diesem Fall kann das Ermitteln, ob eine Veränderung der zweiten Betriebsdaten 8 vorliegt, durch die jeweilige Datensammeleinheit zum Sammeln der zweiten Betriebsdaten 8 durchgeführt werden und optional auch ein Befehl zum Ausführen der Analyse von der jeweilige Datensammeleinheit zum Sammeln der zweiten Betriebsdaten 8 ausgegeben werden.

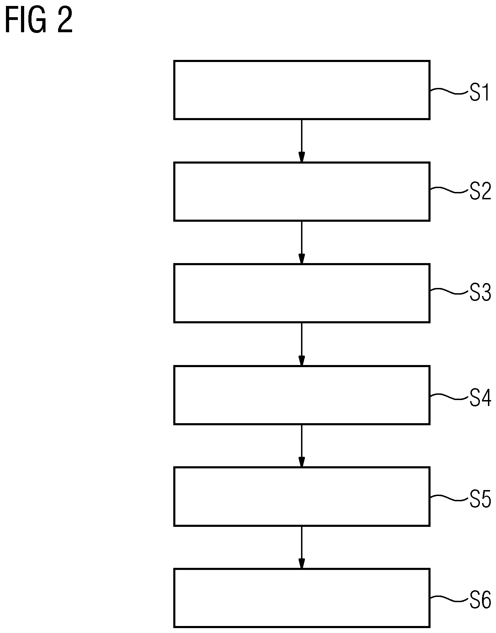

FIG 2 zeigt die genannten Schritte nochmals in einem Ablaufdiagramm zusammengefasst: Empfangen der ersten Betriebsdaten 7 durch die Datensammeleinheit 3 aus der Gerätschaft 2 in einem Schritt S1; Übermitteln der ersten Betriebsdaten 7 an die Auswerteeinheit 4 durch die Datensammeleinheit 3 in einem Schritt S2; Auswerten der ersten Betriebsdaten 7 durch die Auswertevorrichtung 4 in einem Schritt S3; Empfangen des Auswertungsergebnisses 9 der Auswertung durch die Servereinrichtung 5 in einem Schritt S4; Bereitstellen der Analysefunktion 11 basierend auf dem Auswertungsergebnis 9 durch die Servereinrichtung 5 in einem Schritt S5; sowie Analysieren der zweiten Betriebsdaten 8 mittels der Analysefunktion 11 durch die Servereinrichtung 5 in einem Schritt S6.

In der Servervorrichtung 5 können mehrere Analysefunktionen 11 bereitgestellt sein. Beispielsweise sind mehrere Analysefunktionen 11 mit unterschiedlicher Versionsnummer bereitgestellt. Dementsprechend können ältere und neuere Versionen derselben Analysefunktionen 11 bereitgestellt sein. Nach der Aktualisierung der Analysefunktionen 11 durch eine neuere Version können nach Ablauf einer vorbestimmten Zeitspanne ältere Versionen der Analysefunktionen 11 gelöscht werden.

Die Servervorrichtung 5 umfasst vorliegend einen Zähler 13, der bei jedem Aufruf der Analysefunktion 11 mittels des Aufrufbefehls 15 um ein vorbestimmtes oder vorgebbares Maß verändert wird. Alternativ oder zusätzlich kann der Zähler 13 auch dann um das vorbestimmte oder vorgebbare Maß verändert werden, wenn die Analysefunktion 11 aus einem anderen Grund als der Übermittlung des Aufrufbefehls 15 ausgeführt wird.

Das Maß, um welches der Zähler 13 verändert wird, kann abhängig von einem Umfang der zweiten Betriebsdaten 8 und/oder abhängig von einer Zeit, die für das Analysieren der zweiten Betriebsdaten 8 benötigt wird, vorgegeben werden. Mit anderen Worten kann das Maß, um welches der Zähler 13 bei jedem Aufruf der Analysefunktion 11 verändert wird, von einem Rechenaufwand bei dem Aufrufen der Analysefunktion 11 abhängen. Vorteilhafter Weise wird das Maß umso größer vorgegeben, umso größer der Rechenaufwand, also der Umfang der zweiten Betriebsdaten 8 und/oder der Zeitbedarf für das Durchführen der Analyse, ist. Auf diese Weise kann der Zähler 13 eine Inanspruchnahme der Servervorrichtung 5 durch das Aufrufen der Analysefunktion 11 repräsentieren. Insbesondere repräsentiert der Zähler 13 eine durch das Aufrufen der Analysefunktion 11 in Anspruch genommene Rechenzeit.

Bei der Recheneinheit 6 des Anwenders kann es sich beispielsweise um einen Personalcomputer, einen Laptop, einen Tabletcomputer oder ein mobiles Endgerät des Anwenders handeln. Bei dem Anwender handelt es sich insbesondere um einen Betreiber der Gerätschaft 2. Dementsprechend kann sich die Recheneinheit 6 des Anwenders an einem Ort der Gerätschaft 2 befinden. In manchen Ausführungsformen kann die Recheneinheit 6 des Anwenders Teil einer Steuereinheit zum Steuern der Gerätschaft 2 sein. Die Datensammeleinheit 3 kann beispielsweise an der Gerätschaft 2 oder in der Servervorrichtung 5 verortet sein. Beispielsweise kann die Datensammeleinheit 3 Teil der Steuereinheit zum Steuern der Gerätschaft 2 sein. Alternativ kann die Datensammeleinheit 3 durch eine von der Servervorrichtung 5 getrennten separaten Servervorrichtung bereitgestellt sein. Bei der Auswertevorrichtung 4 kann es sich beispielsweise um einen Personalcomputer, einen Laptop, einen Tabletcomputer oder ein mobiles Endgerät handeln. Die Auswertevorrichtung 4 ist insbesondere von der Servervorrichtung 5 und der Recheneinheit 6 des Anwenders räumlich getrennt. Die Auswertevorrichtung 4 kann von der Datensammeleinheit 3 räumlich getrennt sein.

Insgesamt ist gezeigt, wie durch das System 1 und das zugrundeliegende Verfahren eine zügigere Bereitstellung der Analysefunktion 11 für die Gerätschaft 2 ermöglicht wird.

## Patentansprüche

1. Verfahren zum Bereitstellen einer Analysefunktion (11) für einen Betrieb einer Gerätschaft (2), mit den Schritten:
- Auswerten (S3) von ersten Betriebsdaten (7) der Gerätschaft (2) durch eine Auswertevorrichtung (4),
- Empfangen (S4) eines Auswertungsergebnisses (9) der Auswertung durch eine Servervorrichtung (5),
- basierend auf dem Auswertungsergebnis (9), Bereitstellen (S5) einer Analysefunktion (11) zum Analysieren von den ersten Betriebsdaten (7) verschiedener zweiter Betriebsdaten (8) der Gerätschaft (2) durch die Servervorrichtung (5), und
- Analysieren (S6) der zweiten Betriebsdaten (8) mittels der Analysefunktion (11) durch die Servervorrichtung (5).

2. Verfahren nach Anspruch 1, **dadurch gekennzeichnet, dass** die ersten Betriebsdaten (7) und die zweiten Betriebsdaten (8) jeweils aus mehreren funktionellen Einheiten (21, 22 ,23) der Gerätschaft (2) empfangen werden.

3. Verfahren nach einem der vorhergehenden Ansprüche, **dadurch gekennzeichnet, dass**
- eine Vorschrift zum Analysieren der zukünftigen Betriebsdaten (7, 8) als das Auswertungsergebnis (9) empfangen wird, und
- beim Bereitstellen der Analysefunktion (11) die Analysefunktion (11) aus der empfangenen Vorschrift zum Analysieren gebildet wird.

4. Verfahren nach Anspruch 3, **dadurch gekennzeichnet, dass** das Bereitstellen der Analysefunktion (11) zumindest teilweise durch einen Parser (12) erfolgt und der Parser (12) hierbei eine Schnittstelle zum Analysieren der zweiten Betriebsdaten (8) durch die als das Auswertungsergebnis (9) empfangene Vorschrift erzeugt.

5. Verfahren nach einem der vorhergehenden Ansprüche, **dadurch gekennzeichnet, dass**
- die ersten und die zweiten Betriebsdaten (8) in zu nutzende und nicht zu nutzende Daten kategorisiert werden, und
- nur die zu nutzenden Daten der zweiten Betriebsdaten (8) für die Analyse verwendet werden.

6. Verfahren nach Anspruch 5, **dadurch gekennzeichnet, dass**
- die zu nutzenden Daten der zweiten Betriebsdaten (8) wiederholt aus der Gerätschaft abgerufen werden,
- die zu nutzenden Daten der zweiten Betriebsdaten (8) auf Änderungen untersucht werden, und
- bei einer eine Änderung jeweiliger der zu nutzenden Daten der zweiten Betriebsdaten (8) diese mit der Analysefunktion (11) analysiert werden.

7. Verfahren nach einem der vorhergehenden Ansprüche, **dadurch gekennzeichnet, dass** bei Aufruf der Analysefunktion (11) ein Zähler (13) einer Zähleinrichtung um ein Maß verändert wird.

8. Verfahren nach Anspruch 7, **dadurch gekennzeichnet, dass** das Maß, um welches der Zähler (13) der Zähleinrichtung verändert wird, abhängig von einem Umfang hierfür herangezogener Betriebsdaten (7, 8) und/oder einem Zeitaufwand für das Aufruf der Analysefunktion (11) vorgegeben wird.

9. Verfahren nach einem der vorhergehenden Ansprüche, **dadurch gekennzeichnet, dass** bei dem Analysieren der zweiten Betriebsdaten (8) basierend auf den zweiten Betriebsdaten (8) eine verbleibende Lebensdauer zumindest eines Bauteils der Gerätschaft (2) durch die Analysefunktion (11) ermittelt wird.

10. Verfahren nach einem der vorhergehenden Ansprüche, **gekennzeichnet, durch** die weiteren Schritte:
- Empfangen (S1) der ersten Betriebsdaten (7) von der Gerätschaft (2) durch eine Datensammeleinheit (3),
- Übermitteln (S2) der ersten Betriebsdaten (7) für die Auswertung an die Auswertevorrichtung (4) durch die Datensammeleinheit (3).

11. System (1) zum Bereitstellen einer Analysefunktion (11) für einen Betrieb einer Gerätschaft (2), welche Teil des Systems (1) ist, mit
- einer Auswertevorrichtung (4) zum Auswerten erster Betriebsdaten (7),, und
- einer Servervorrichtung (5)
- zum Empfangen eines Auswertungsergebnisses (9) der Auswertung von der Auswertevorrichtung (4),
- zum automatisierten Bereitstellen einer Analysefunktion (11) basierend auf dem Auswertungsergebnis (9) zum Analysieren zweiter Betriebsdaten (8) der Gerätschaft (2), die von den ersten Betriebsdaten (7) verschieden sind, sowie
- zum Empfangen und Analysieren der zweiten Betriebsdaten (8) mittels der Analysefunktion (11).

12. Computerprogramm, welches direkt in einen Speicher einer Steuereinrichtung eines System (1) zum Bereitstellen einer Analysefunktion (11) ladbar ist, mit Programmcodemitteln, um die Schritte des Verfahrens nach einem der Ansprüche 1 bis 10 auszuführen, wenn das Programm in der Steuereinrichtung des Systems (1) ausgeführt wird.

13. Speichermedium mit darauf gespeicherten elektronisch lesbaren Steuerinformationen, welche zumindest ein Computerprogramm nach Anspruch 12 umfassen und derart ausgestaltet sind, dass sie bei Verwendung des Speichermediums in einer Steuereinrichtung eines System (1) zum Bereitstellen einer Analysefunktion (11) ein Verfahren nach einem der Ansprüche 1 bis 10 durchführen.

14. Datenstrom mit einem Analyseergebnis, welches mittels eines Verfahrens nach einem der Ansprüche 1 bis 10 gewonnen wurde.
